**Europäisches Patentamt**

(19) **European Patent Office**

**Office européen des brevets**

(11) Numéro de publication: **0 033 670**
**B1**

## (12) FASCICULE DE BREVET EUROPEEN

(45) Date de publication du fascicule du brevet:
14.03.84

(21) Numéro de dépôt: **81400020.4**

(22) Date de dépôt: **09.01.81**

(51) Int. Cl.³: **A 01 J 25/12**

(54) **Procédé et installation pour le démoulage des fromages à pâte molle.**

(30) Priorité: **04.02.80 FR 8002341**

(43) Date de publication de la demande:
**12.08.81 Bulletin 81/32**

(45) Mention de la délivrance du brevet:
**14.03.84 Bulletin 84/11**

(84) Etats contractants désignés:
**AT BE CH DE GB IT LI LU NL SE**

(56) Documents cités:
**DE - A - 2 834 544**
**FR - A - 1 333 833**
**FR - A - 1 421 060**
**FR - A - 1 564 629**
**FR - A - 2 011 620**

(73) Titulaire: **Cartier, Société Anonyme, Boîte Postale No 23,**
**F-17700 Surgeres (FR)**

(72) Inventeur: **Boucher, Michel, Lotissement "Le Prieur",**
**F-17700 Surgeres (FR)**

(74) Mandataire: **Fontanié, Etienne, FIVES-CAIL**
**BABCOCK 7, rue Montalivet, F-75383 Paris**
**Cedex 08 (FR)**

BUNDESDRUCKEREI BERLIN

## Procédé et installation pour le démoulage des fromages à pâte molle

La présente invention a pour objet un procédé et une installation pour le démoulage des fromages à pâte molle.

Pour fabriquer des fromages à pâte molle, on utilise des moules constitués par des cylindres verticaux ouverts à leurs deux extrémités et assemblés pour former une unité qui repose sur un plateau, avec interposition d'un store facilitant l'égouttage du sérum. Lorsque l'égouttage est terminé et que le fromage a une consitance suffisante, on le retire des moules pour lui faire subir un traitement ultérieur.

Le démoulage peut être effectué mécaniquement par exemple au moyen de ventouses qui pénètrent dans les moules, se fixent sur les fromages, et les extraient par le haut des moules qui sont maintenus en place par un dispositif de serrage. Au cours de cette opération, le fromage frotte sur la paroi du moule qui est relativement haut et les forces de frottement s'opposant à l'effort de traction exercé par la ventouse risquent de provoquer la destruction du fromage. Ce risque est d'autant plus grand que la paroi des moules est souvent salie par des grains de caillé séché qui peuvent déchirer la peau du fromage. De plus les formages présentent fréquement une »casquette« constituée par du caillé qui s'est infiltré entre le bas du moule et le store et cette »casquette« risque également d'être déchirée au cours du démoulage.

Pour remédier à ces inconvénients, on a proposé (FR-A-1 564 629) de démouler les fromages par le bas en soulevant les moules. Dans ce procédé connu, lorsqu'on souléve les moules, les fromages peuvent, soit rester en place sur le plateau, soit être soulevés avec les moules puis retomber sur le plateau, suivant l'importance des forces de frottement entre la paroi des moules et les fromages.

On ne peut donc pas avoir la certitude que les fromages seront tous soulevés avec les moules et resteront dans les moules le temps nécessaire pour remplacer le plateau par une claie. Il est donc impossible avec ce procédé d'assurer, en même temps que le démoulage le transfert des fromages du plateau sur une claie. Le plateau doit être maintenu en place pendant tout le temps où les moules sont soulevés et les fromages qui ont été soulevés avec les moules doivent être redéposés sur ce plateau. Le transfert des fromages sur une claie pour l'égouttage final et l'affinage nécessitera donc une manutention supplémentaire qui sera généralement faite manuellement. Par ailleurs, dans ce procédé connu, les fromages qui ont été soulevés par les moules retombent ensuite sur le plateau, d'une hauteur plus ou moins grande, et risquent d'être endommagés par cette chute.

La présente invention a pour but d'éviter d'endommager les fromages pendant le démoulage et d'assurer, en une seule opération, le démoulage et le transfert des fromages du plateau porte-moule sur une claie.

L'invention a plus particulièrement pour objet un procédé de démoulage d'un fromage à pâte molle formé dans un moule constitué par un cylindre vertical, ouvert à ses deux extrémités et reposant sur un plateau, consistant à soulever simultanément le moule et le fromage pour les écarter du plateau et à extraire le fromage du moule par le bas, caractérisé en ce qu'on soulève le fromage avec des moyens distincts de ceux servant à soulever le moule, on dispose un support sous le moule, à la place du plateau, et, en utilisant lesdits moyens, on déplace le fromage vers le bas et on le délpose sur ledit support.

L'invention a également pour objet une installation pour le démoulage des fromages à pâte molle formés dans un moule constitué par un groupe de cylindres verticaux ouverts à leurs extrémités et reposant sur un plateau caractérisé en ce que des moyens y sont prévus pour commander les déplacements verticaux d'un groupe de ventouses servant à soulever les fromages et d'une pince servant à soulever les moules, soit en synchronisme pour déplacer ensemble les fromages et les moules, soit séparément pour extraire les fromages des moules par le bas.

Les ventouses et la pince sont disposées au-dessus d'un transporteur assurant le déplacement pas-à-pas des plateaux portant les moules et des claies recevant les fromages après démoulage, les plateaux et les claies alternant sur le transporteur. Des moyens sont prévus pour commander l'avance d'un pas du transporteur après le déplacement vers le haut des ventouses et de la pince, pour amener une claie à la place d'un plateau sous les ventouses, puis une nouvelle avance d'un pas, après que les formages aient été déposés sur la claie, pour amener un autre plateau porte-moule sous les ventouses.

La pince est déplaçable horizontalement et des moyens sont prévus pour commander le déplacement horizontal de la pince lorsqu'elle est en position haute, pour amener les moules au-dessus d'un plateau vide, puis son déplacement vertical vers le bas pour déposer les moules sur le plateau.

Dans un mode de réalisation particulier de l'invention, le dispositif de serrage des moules comporte deux pinces montées sur un cadre pouvant tourner autour d'un axe vertical de telle sorte qu'une pince vienne prendre la place de l'autre par rotation de 180° autour de cet axe, et l'écartement entre les deux pinces correspond à une avance de deux pas du transporteur de sorte que lorsqu'une des pinces vient déposer les moules vides sur leur plateau, l'autre pince vient saisir les moules posés sur le plateau suivant.

Le cadre porte-pince est fixé à l'extrémité d'un premier tube vertical monté sur un second tube, fixé à un bâti support, de façon à pouvoir coulisser verticalement et tourner par rapport à celui. Un premier vérin fixé sur ce bâti et dont la tige du piston est reliée au cadre permet de déplacer les pinces verticalement. Un second vérin actionnant une crémaillère horizontale en prise avec une couronne dentée fixée coaxialement sur le premier tube permet de faire tourner ledit cadre.

Avantageusement, les deux pinces sont commandées simultanément par un même mécanisme de telle sorte que lorsqu'une pince s'ouvre, l'autre se ferme. Dans un mode de réalisation préféré, chaque mâchoire des pinces est solidaire d'un arbre, les quatre arbres sont parallèles et leur rotation est commandée par un vérin unique au moyen d'un système de leviers et de bielles.

Les ventouses sont fixées sur un caisson relié par un tuyau souple à une boîte à clapets qui est elle-même reliée une source de vide. Ce caisson est lié à la tige d'un vérin, qui permet de le déplacer verticalement, et est muni de galets déplaçables dans des guides verticaux.

Des griffes sont prévues au poste de démoulage, sur les côtés du transporteur, pour maintenir les bords du plateau et le cas échéant du store interposé entre celuici et les moules.

La description qui suit se réfère aux dessins l'accompagnant qui montrent, à titre d'exemple non-limitatif, un mode de réalisation de l'invention et sur lesquels:

La figure 1 est une vue en élévation d'une installation de démoulage réalisée conformément à l'invention, certaines pièces étant représentées en coupe et d'autres ayant été supprimées pour rendre la figure plus claire;
la figure 2 est une vue en plan du dispositif à pinces utilisé pour la manutention des moules; et
la figure 3 est une vue en plan d'une partie du transporteur montrant les griffes qui maintiennent le store pendant le démoulage.

L'installation représentée sur les dessins comprend essentiellement un transporteur horizontal à chaînes sans fin, un dispositif pneumatique pour la prise des fromages et un dispositif à pinces pour la manutention des moules.

Le transporteur est constitué par une série de petits chariots 10 roulant sur deux rails parallèles 12 et attachés à deux chaînes sans fin. Les chariots 10 sont munis d'organes de support et de centrages 14 et 16 pour les plateaux portemoules 18, d'une part et pour les claies 20 destinées à supporter les fromages après démoulage, d'autre part. Ces organes sont disposés de telle sorte que le transporteur puisse recevoir alternativement un plateau et une claie, dans des positions bien précises et avec un écartement constant. Un mécanisme approprié, de construction classique, permet de communiquer au transporteur un mouvement pas-à-pas avec un pas égal à l'écartement entre plateau et claie.

Une superstructure formée de poutres horizontales 22 et supportées par quatre piliers 24 est placée au-dessus du transporteur. Le dispositif pneumatique de prise des fromages et le dispositif à pinces pour la manutention des moules sont montés sur cette superstructure.

Le dispositif pneumatique de prise est constitué par plusieurs ventouses 26 reliées à un caisson 28 auquel elles sont fixées. Le caisson est lui-même relié par un tuyau souple à une boîte à clapets 30 qui permet de le mettre en communication soit avec une source de vide, soit avec l'atmosphère. Le nombre de ventouses correspond au nombre de moules portés par un plateau. Ces moules sont constitués par des cylindres verticaux, ouverts à leurs deux extrémités et assemblés pour former une unité; actuellement cet ensemble est généralement réalisé d'une seule pièce en matière plastique. La disposition des ventouses est telle que chaque ventouse peut pénétrer dans un moule lorsque le plateau porte-moules est correctement positionné. Le caisson 28 est fixé à l'extrémité de la tige d'un vérin double 32 et est équipé de galets roulant dans des guides verticaux 34. Le vérin 32 est en fait formé de deux cylindres accolés par leur fond, la tige du piston du cylindre inférieur étant fixée au caisson et la tige du piston du cylindre supérieur étant fixée à une partie surélevée de la superstructure. Le vérin permet de maintenir le caisson et les ventouses à trois niveaux différents: un niveau supérieur, quand les deux pistons sont au fond des cylindres, un niveau inférieur, quand les pistons se trouvent aux extrémités opposées des cylindres et un niveau intermédiaire, quand l'un des pistons est au fond du cylindre respectif et l'autre piston est à l'extrémité opposée de son cylindre.

Le dispositif pour la manutention des moules est constitué par un cadre 40 qui porte les pinces et est fixé à l'extrémité inférieure d'un tube vertical 42 monté sur un second tube 44, solidaire de l'une des poutres 22, de façon à pouvoir coulisser verticalement et tourner sur ce dernier. Le cadre 40 est supporté par une tige 46 fixée à l'extrémité de la tige d'un vérin 48 monté sur la poutre 22, coaxialement aux tubes 42 et 44. Un roulement est interposé entre la tige 46 et le cadre pour permettre sa rotation. Celleci est commandée par une crémaillère 50 actionnée par un vérin 52 et en prise avec une couronne dentée fixée sur le tube 42. Les hauteurs des dentures de la crémaillère et de la couronne sont telles que la couronne reste toujours en prise avec la crémaillère lorsque le cadre est déplacé verticalement par le vérin 48 entre deux positions extrêmes.

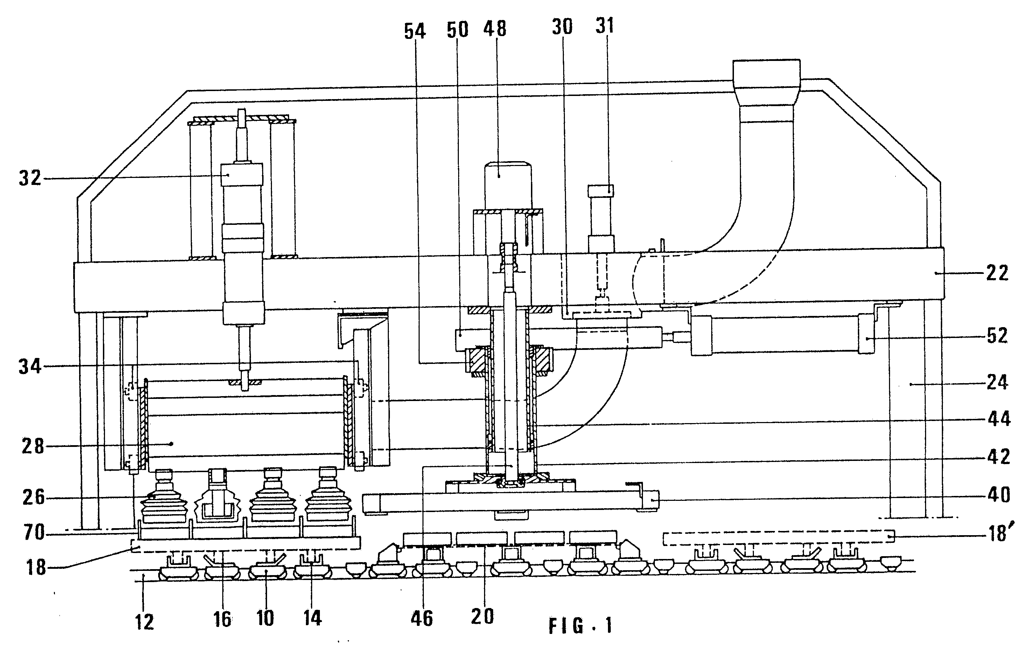

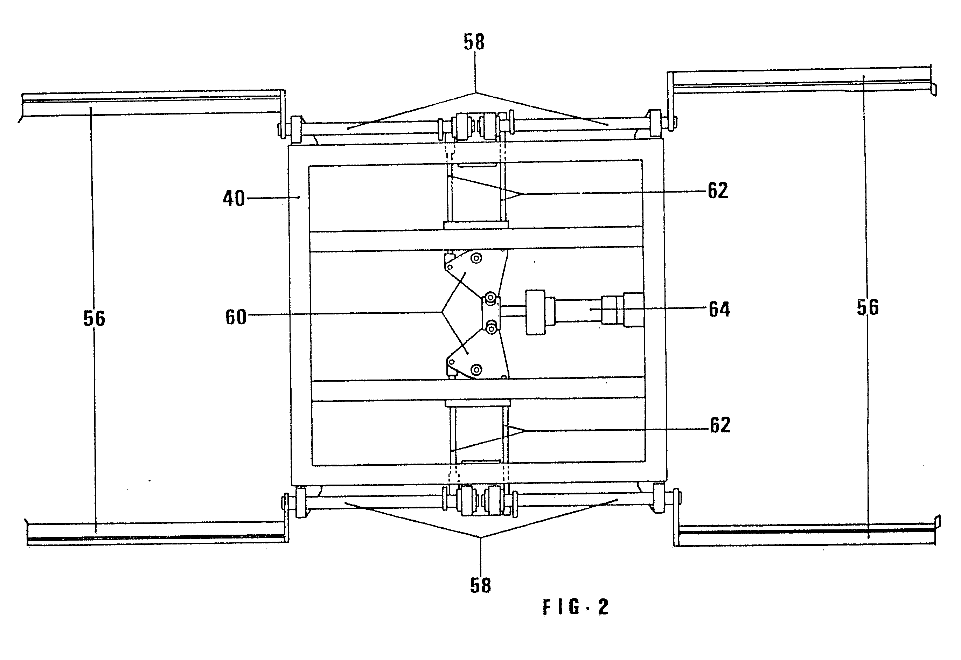

Les pinces sont disposées de part et d'autre du cadre 40, symétriquement par rapport à son axe de rotation, et leur écartement correspond à celui des plateaux sur le transporteur, de sorte qu'en faisant tourner le cadre on peut transporter les moules pris par une pince d'un plateau au plateau voisin. Les pinces et leur mécanisme de commande, visibles sur la figure 2, n'ont pas été représentés sur la figure 1.

Chaque pince comporte deux mâchoires 56 solidaires d'arbres 58 montés dans des paliers fixés au cadre 40. Les quatre arbres des deux pinces sont disposés horizontalement et sont parallèles entre eux. Les arbres des mâchoires correspondantes des deux pinces sont alignés et reliés par un système bielle manivelle à un levier 60 monté privotant, autour d'un axe vertical, sur le cadre 40. Les points d'articulation des bielles 62 sur les leviers 60 sont placés de part et d'autre de leur axe de rotation et à égales distances de celui-ci, de telle sorte que la rotation de chaque levier provoque des rotations en sens inverses des arbres qu'il commande. La rotation des deux leviers 60 est commandée par un vérin 64 fixé sur le cadre 40. Ce mécanisme permet de fermer l'une des pinces pour saisir un ensemble de moules sur le plateau placé sous le dispositif pneumatique de prise et simultanément d'ouvrir l'autre pince pour déposer un autre ensemble de moules sur le plateau placé deux pas en aval sur le transporteur.

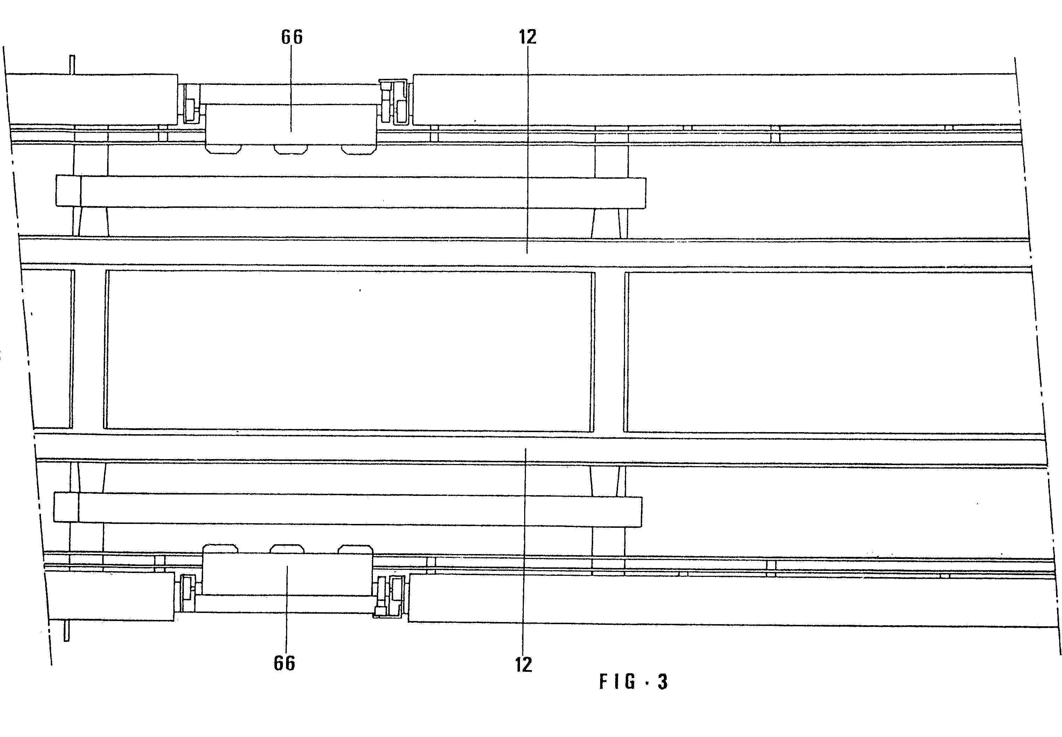

Généralement, un store en bois ou en matière plastique est interposé entre le moule et le plateau pour faciliter l'égouttage; c'est sur ce store que reposent les fromages. Pour éviter que ce store soit soulevé avec les fromages et les moules, on prévoit sur les deux côtés du transporteur, des griffes pivotantes 66, commandées par vérins, qui se rabattent sur les bords du plateau, en emprisonnant les bords du store, lorsque le plateau se trouve sous le dispositif de prise pneumatique (fig. 3).

Pour expliquer le fonctionnement de cette installation, on supposera qu'un plateau porte-moules vient d'être amené par le transporteur au poste de démoulage, c'est-à-dire sous le dispositif pneumatique de prise. Les vérins 32 et 64 sont alors commandés pour descendre les ventouses dans les moules 70 et serrer le groupe de moules au moyen de la pince, située à gauche sur la figure 1, du dispositif de manutention des moules dont le cadre se trouve alors en position inférieure, comme représenté sur la figure 1. Lorsque les ventouses sont au contact des fromages, le vérin 31 de la boîte à clapet 30 est commandé pour relier les ventouses à la source de vide. Simultanément les griffes 66 sont rabattues sur le plateau pour maintenir le store.

Les vérins 32 et 48 sont ensuite commandés pour soulever simultanément et à la même vitesse les ventouses et le cadre porte-pinces et, par conséquent, les fromages maintenus par les ventouses et les moules maintenus par la pince. A la fin de cette opération, le transporteur avance d'un pas dans le sens de la flèche de la figure 1 pour amener une claie 20 au poste de démoulage puis le vérin 32 est commandé pour descendre les ventouses et déposer les fromages sur la claie. Le vérin 31 de la boîte à clapets est alors commandé pour relier les ventouses à l'atmosphère et le vérin 32 est commandé pour soulever les ventouses au-dessus des moules qui sont toujours maintenus par la pince en position haute. Le transporteur avance alors d'un pas pour amener un autre plateau chargé de moules pleins au poste de démoulage

et le vérin 52 est commandé pour faire tourner le cadre porte-pinces de 180° et amener les moules vides au-dessus de leur plateau 18'. Lorsque la rotation du cadre porte-pinces est terminée, on le déplace vers le bas au moyen du vérin 48 pour déposer le groupe de moules vides sur le plateau 18'. On recommence alors les mêmes opérations, le vérin 64 commandant simultanément la fermeture de la pince gauche qui vient serrer les moules placés au poste de démoulage et l'ouverture de la pince droite dont les mâchoires se dégagent des moules vides placés sur le plateau 18'. Les claies portant les fromages et les plateaux portant les moules vides sont ensuite déchargés du transporteur manuellement ou mécaniquement.

Le fonctionnement de tous les vérins est contrôlé par des électro-vannes commandées par un programmateur de façon que les opérations décrites ci-dessus soient effectuées dans l'ordre indiqué; ce programmateur commande aussi l'avance du transporteur.

De nombreuses modifications peuvent être apportées à la structure de l'installation décrite ci-dessus, par l'emploi de moyens techniques équivalents, ainsi qu'à son mode de fonctionnement et il doit être entendu que toutes ces modifications entrent dans le cadre de l'invention.

**Revendications**

1. Procédé pour le démoulage d'un fromage à pâte molle formé dans un moule (70) constitué par un cylindre vertical, ouvert à ses deux extrémités et reposant sur un plateau (18), consistant à soulever simultanément le moule (70) et le fromage pour les écarter du plateau (18), et à extraire le fromage du moule par le bas caractérisé en ce qu'on soulève le fromage avec des moyens (26) distincts de ceux (56) servant à soulever le moule, on dispose un support (20) sous le moule, à la place du plateau (18) et, en utilisant les dits moyens (26) on déplace le fromage vers le bas et on le dépose sur ledit support.

2. Installation pour le démoulage des fromages à pâte molle formés dans un moule (70) constitué par un groupe de cylindres verticaux, ouverts à leurs extrémités et reposant sur un plateau (18) selon le procédé de la revendication 1, caractérisé en ce que des moyens (32, 48) sont prévus pour commander les déplacements verticaux d'un groupe de ventouses (26) servant à soulever les fromages, et d'une pince (56) servant à soulever les moules (70), soit en synchronisme pour déplacer ensemble les fromages et les moules, soit séparément pour extraire les fromages des moules par le bas.

3. Installation selon la revendication 2, caractérisée en ce que les ventouses (26) et la pince (56) sont disposées au-dessus d'un transporteur (12) assurant le déplacement pas-à-pas des plateaux (18) portant les moules et des claies (20) constituant ledit support, les plateaux et les claies alternant sur le transporteur, et en ce que des moyens sont prévus pour commander l'avance d'un pas du transporteur après le déplacement vers le haut des ventouses et de la pince, pour amener une claie à la place du plateau, sous les ventouses, puis une nouvelle avance d'un pas, après que les fromages aient été déposés sur la claie, pour amener un autre plateau porte-moules sous les ventouses.

4. Installation selon la revendication 3 caractérisée en ce que la pince (56) est déplaçable horizontalement et des moyens (48, 50, 52, 54) sont prévus pour commander le déplacement horizontal de la pince, lorsqu'elle est en position haute, pour amener les moules (70) au-dessus d'un plateau vide (18'), puis son déplacement vertical vers le bas pour déposer les moules sur leur plateau.

5. Installation selon la revendication 4, caractérisée en ce qu'elle comporte deux pinces (56) montées sur un cadre (40) pouvant tourner autour d'un vertical, de telle sorte qu'une pince vienne prendre la place de l'autre par rotation de 180° autour de cet axe, et l'écartement entre les deux pinces correspond à une avance de deux pas du transporteur (12) de sorte que lorsque l'une des pinces vient déposer les moules (70) vides sur leur plateau (18'), l'autre pince vient saisir les moules posés sur le plateau suivant (18).

6. Installation selon la revendication 5, caractérisée en ce que le cadre porte-pinces (40) est fixé à l'extrémité d'un premier tube vertical (42) monté sur un second tube (44), fixé à un bâti support (22), de façon à pouvoir coulisser et tourner par rapport à ce dernier, un premier vérin (48) fixé sur ce bâti et dont la tige du piston est reliée au dit cadre permet de déplacer les pinces verticalement, et un second vérin (52) actionnant une crémaillère horizontale (50) en prise avec une couronne dentée (54) fixée coaxialement sur le premier tube permet de faire tourner ledit cadre.

7. Installation selon la revendication 5 ou 6, caractérisée en ce que les deux pinces (56) sont commandées simultanément par un même mécanisme de telle sorte que lorsqu'une pince s'ouvre, l'autre se ferme.

8. Installation selon la revendication 7, caractérisée en ce que chaque pince (56) comporte deux mâchoires et chaque mâchoire est solidaire d'un arbre (58), les quatre arbres des pinces étant parallèles et leur rotation étant commandée par un vérin unique (65) au moyen d'un système de leviers (60) et de bielles (62)

9. Installation selon l'une quelconque des revendications précédentes, caractérisée en ce que les ventouses (26) sont fixées sur un caisson (28) relié par un tuyau souple à une boîte à clapet (30) qui est elle-même reliée à une source de vide, ledit caisson étant lié à la tige d'un vérin (32) qui permet de le déplacer verticalement et étant muni de galets déplaçables dans des guides verticaux (34).

10. Installation selon l'une quelconque des revcendications précédentes, caractérisée en ce que des griffes (66) sont prévues au poste de démoulage, sur les côtés du transporteur (12), pour maintenir les bords du plateau (18) et le cas échéant du store interposé entre celui-ci et les moules (70).

**Patentansprüche**

1. Verfahren zum Ausformen von in einer Form (70) geformten Weichkäse, wobei diese Form (70) durch einen vertikalen, an beiden Enden geöffneten und auf einem Tablett (18) ruhenden Zylinder gebildet wird, bestehend darin, die Form (70) und den Käse gleichzeitig zu heben, um sie von dem Tablett (18) zu entfernen, und den Käse von unten her herauszunehmen, dadurch gekennzeichnet, daß man den Käse mit anderen Mitteln (26) hebt als die Mittel (56) zum Heben der Form, man eine Unterlage (20) anstelle vom Tablett (18) unter die Form anbringt, und man unter Verwendung der Mittel (26) den Käse nach unten bewegt und ihn auf die Unterlage ablegt.

2. Vorrichtung zum Ausformen von in einer Form (70) geformten Weichkäse nach dem Verfahren gemäß Anspruch 1, wobei diese Form durch einen Satz von vertikalen, an beiden geöffneten und auf einem Tablett (18) ruhenden Zylindern gebildet wird, dadurch gekennzeichnet, daß Mittel (32, 48) vorgesehen sind, um die vertikalen Bewegungen eines Satzes von Gummisaugern (26) zum Heben des Käses und einer Zange (56) zum Heben der Formen (70) zu steuern, entweder im Gleichtakt, um den Käse und die Formen zusammen zu bewegen, oder getrennt, um den Käse von unten her herauszunehmen.

3. Vorrichtung nach Anspruch 2, dadurch gekennzeichnet, daß die Gummisauger (26) und die Zange (56) über einem Förderer (12) angeordnet sind, der die die Formen tragenden Tablette (18) und die die Unterlage bildenden Horden (20) schrittweise bewegt, wobei die Tablette und die Horden auf dem Förderer abwechselnd angeordnet sind, und daß Mittel vorgesehen sind, um das Vorrücken des Förderers um einen Schritt nach der Bewegung nach oben der Gummisauger und der Zange zu steuern, um eine Horde anstelle vom Tablett unter die Gummisaugern zu bringen, und dann ein neues Vorrücken um einen Schritt nach dem Ablegen des Käses auf die Horde zu bewirken, um ein neues formentragendes Tablett unter die Gummisauger zu bringen.

4. Vorrichtung nach Anspruch 3, dadurch gekennzeichnet, daß die Zange (56) horizontal beweglich ist, und daß Mittel (48, 50, 52, 54) vorgesehen sind, um die horizontale Bewegung der Zange zu steuern, wenn diese in Hochstellung ist, um die Formen (70) oberhalb eines leeren Tabletts (18') zu bringen, und dann deren vertikale Bewegung nach unten zu steuern, um die Formen auf das zugehörige Tablett abzulegen.

5. Vorrichtung nach Anspruch 4, dadurch gekennzeichnet, daß sie zwei Zangen (56) umfaßt, die auf einem um eine Vertikalachse drehbaren Rahmen (40) montiert sind, so daß eine Zange durch eine 180°-Drehung um diese Achse die Stelle der anderen einnimmt, und daß der Abstand zwischen den beiden Zangen dem Vorrücken des Förderers (12) um zwei Schritte entspricht, so daß, wenn eine Zange die leeren Formen (70) auf das zugehörige Tablett (18') ablegt, die andere Zange die auf dem nächsten Tablett (18) abgelegten Formen greift.

6. Vorrichtung nach Anspruch 5, dadurch gekennzeichnet, daß der formentragende Rahmen (40) am Ende eines ersten vertikalen Rohres (42) befestigt ist, der auf einem zweiten, an einem Traggestell (22) befestigten Rohr (44) montiert ist, so daß er gegenüber dem zweiten Rohr gleiten und sich drehen kann, daß ein erster, auf diesem Traggestell befestigter Arbeitszylinder (48), dessen Kolbenstange auf dem Rahmen verbunden ist, die vertikale Bewegung der Zangen ermöglicht, und daß ein zweiter Arbeitszylinder (52), der eine horizontale Zahnstange (50) betätigt, die in einen am ersten Rohr koaxial befestigten Zahnkranz (54) eingreift, die Drehung des Rahmens ermöglicht.

7. Vorrichtung nach Anspruch 5 oder 6, dadurch gekennzeichnet, daß beide Zangen (56) durch denselben Mechanismus gleichzeitig gesteuert werden, so daß sich eine Zange schließt, wenn sich die andere öffnet.

8. Vorrichtung nach Anspruch 7, dadurch gekennzeichnet, daß jede Zange (56) zwei Backen umfaßt, und jede Backe mit einer Welle (58) kraftschlüssig verbunden ist, wobei die vier Wellen der Zangen zueinander parallel sind und deren Drehung durch einen einzigen Arbeitszylinder (64) mittels eines Systems von Hebeln (60) und Pleuelstangen (62) gesteuert wird.

9. Vorrichtung nach irgendeinem der vorstehenden Ansprüche, dadurch gekennzeichnet, daß die Gummisauger (26) an einem Kasten (28) befestigt sind, der über einen Schlauch mit einem Ventilgehäuse (30) verbunden ist, der selbst mit einer Vakuumquelle verbunden ist, wobei der Kasten mit der Stange eines Arbeitszylinders (32) für seine vertikale Bewegung verbunden ist und mit in vertikalen Führungen (34) beweglichen Rollen versehen ist.

10. Vorrichtung nach irgendeinem der vorstehenden Ansprüche, dadurch gekennzeichnet, daß Klemmen (66) in der Ausformanlage auf den Seiten des Förderers (12) vorgesehen sind, um die Ränder des Tabletts (18) und gegebenenfalls der zwischen dem Tablett und den Formen (70) angeordneten Matte zu halten.

## Claims

1. Method for removing soft cheese from a mould (70) consisting of a vertical cylinder, open at both ends and resting on a tray (18), which consists in simultaneously raising the mould (70) and the cheese to move them away from the tray (18), and in extracting the cheese through the bottom of the mould, characterized by the fact that the cheese is lifted by means (26) different from those (56) used to lift the mould, that a support (20) is put under the mould, this support taking the place of the tray (18) and that, using the said means (26), the cheese is moved downwards and deposited on the said support.

2. Apparatus for removing soft cheese from a mould (70) consisting of a set of vertical cylinders, open at both ends and resting on a tray (18) according to the method in claim 1, characterized by the fact that means (32, 48) are provided to control the vertical movements of a set of suction cups (26) used to raise the cheeses and of a clamp (56) used to raise the moulds (70), either both at the same time to move the cheeses and the moulds together, or separately, to extract the cheeses from the moulds through the bottom.

3. Apparatus as in claim 2, characterized by the fact that the suction cups (26) and the clamp (56) are placed over a conveyor (12) which ensures the step by step movement of the trays (18) carrying the moulds and the grates (20) constituting the said support, the trays and the grates alternating on the conveyor, and by the fact that means are provided to control the one-step forward movement of the conveyor after the raising of the suction cups and the clamp, to bring a grate in place of the tray, under the suction cups, and then to control another step forward movement once the cheeses have been deposited on the grate, to move another tray carrying moulds underneath the suction cups.

4. Apparatus as in claim 3, characterized by the fact that the clamp (56) may be moved horizontally and means (48, 50, 52, 54) are provided to control the horizontal movement of the clamp whilst it is in an up position, to bring the moulds (70) over an empty tray (18'), and then to control its downward vertical movement to deposit the moulds on the tray.

5. Apparatus as in claim 4, characterized by the fact that it is comprised of two clamps (56) mounted on a frame (40) which may be turned about a vertical axis, in such a manner that one clamp comes to take the place of the other by a 180° rotation around this axis and the changeover of the two clamps corresponds to two steps forward by the conveyor (12) so that when one of the clamps deposits the empty moulds (70) on their tray (18'), the other clamp picks up the moulds deposited on the following tray (18).

6. Apparatus as in claim 5, characterized by the fact that the frame (40) holding the clamps is fixed on the end of a first vertical tube (42) mounted on a second tube (44), fixed to a support mounting (22) so as to be able to slide and turn in relation to the latter, that a first jack (48) fixed on this mounting and whose piston rodis attached to the said frame, allows the clamps to be moved vertically, and that a second jack (52), which actuates a horozontal rack (50) connected to a gearwheel (54) coaxially mounted on the first tube, allows the said frame to be rotated.

7. Apparatus as in claim 5 or 6, characterized by the fact that the two clamps (56) are controlled simultaneously by the same mechanism, in such a manner that when one clamp opens, the other closes.

8. Apparatus as in claim 7, characterized by the fact that each clamp (56) consists of two grips and each grip is integral with a shaft (58), the four shafts of the clamps being parallel and their rotation being controlled by one single jack (64) through a system of levers (60) and rods (62).

9. Apparatus as in any one of the previous claims, characterized by the fact that the suction cups (26) are attached to a housing (28) connected by a flexible hose to a valve box (30) which in turn is connected to a vacuum source, the said housing being attached to the rod of a jack (32) which allows it to be moved vertically, and having wheels moving along vertical guide rails (34).

10. Apparatus as in any one of the previous claims, characterized by the fact that grips (66) are provided at the mould emptying point, on either side of the conveyor (12) to hold the edges of the tray, and, should it be necessary, the mat inserted between the latter and the moulds (70).

FIG·1

0 033 670

0 033 670

FIG · 2

58

40

56

60

64

62

62

56

58

FIG · 3